# FASCICULE DE BREVET EUROPEEN

(11) **EP 2 739 884 B1**
(45) Date de publication et mention de la délivrance du brevet: **06.05.2015**
(21) Numéro de dépôt: 12744096.4
(22) Date de dépôt: 23.07.2012
(51) Int. Cl.: F16H 61/30, F16H 61/28

(54) **DISPOSITIF DE COMMANDE HYDRAULIQUE D'UNE BOITE DE VITESSES, PROCEDE ET BOÎTE DE VITESSES ASSOCIES**
VORRICHTUNG ZUM HYDRAULISCHEN STEUERN EINES GETRIEBES SOWIE ENTSPRECHENDES VERFAHREN UND GETRIEBE
DEVICE FOR HYDRAULICALLY CONTROLLING A GEARBOX, AND RELATED METHOD AND GEARBOX

(30) Priorité: 02.08.2011 FR 1157088
(43) Date de publication de la demande: 11.06.2014
(73) Titulaire: Technoboost, 75116 Paris (FR)
(72) Inventeur: WASCHEUL, Michael, F-78260 Acheres (FR); GIANNONI, Marc, F-75009 Paris (FR); MAUREL, Stephane, F-92130 Issy Les Moulineaux (FR)
(74) Mandataire: Fernandez, Francis Lionel
(86) Numéro de dépôt international: PCT/FR2012/051751
(87) Numéro de publication internationale: WO 2013/017776

(56) Documents cités:
- FR-A1- 2 804 192
- FR-A1- 2 928 985
- GB-A- 2 368 104

## Description

### DOMAINE TECHNIQUE DE L'INVENTION

L'invention concerne un dispositif de commande hydraulique d'une boîte de vitesses, son procédé et la boîte de vitesses associés. L'invention trouve une application particulièrement avantageuse dans le domaine des boîtes de vitesses automatiques pour véhicule automobile.

### ETAT DE LA TECHNIQUE

On connaît des véhicules comportant une chaîne de traction formée par un dispositif de propulsion, un embrayage, et une boîte de vitesses qui entraîne les roues du véhicule. L'embrayage est relié d'une part au dispositif de propulsion et d'autre part à la boîte de vitesses, elle-même reliée aux roues.

Une boîte de vitesses comporte un arbre primaire relié à l'embrayage et un arbre secondaire relié aux roues du véhicule, ces deux arbres étant reliés entre eux par l'intermédiaire d'engrenages formant les rapports de vitesse. Chaque engrenage comporte une roue liée en rotation à un des arbres et un pignon fou monté sur l'autre arbre. Des manchons de crabotage, dit aussi baladeur, sont utilisés pour lier sélectivement les pignons fous à l'arbre sur lequel ils sont montés afin d'assurer le passage d'un rapport de vitesse. De manière classique, ces baladeurs se déplacent sous la commande d'une fourchette le long d'un moyeu solidaire d'un arbre de la boîte de vitesses.

Les boîtes de vitesses automatiques comportent également un dispositif de commande actionnant la fourchette, par exemple un dispositif de commande hydraulique. Un dispositif de commande hydraulique comporte au moins un actionneur hydraulique apte à déplacer la fourchette et au moins une électrovanne permettant d'alimenter l'actionneur à l'aide d'une différence de pression entre un accumulateur haute pression et un accumulateur basse pression. La différence de pression entre l'accumulateur haute pression et l'accumulateur basse pression est alimentée par une pompe hydraulique pouvant être actionée par le moteur du véhicule.

Cependant, lorsque le moteur du véhicule est arrêté, si la pression entre les accumulateurs passe sous un seuil critique, l'actionneur n'est plus capable de déplacer la fourchette. Il est donc alors nécessaire de redémarrer le moteur thermique pour augmenter la différence de pression entre les accumulateurs. Or, pour redémarrer le moteur du véhicule, la fourchette de la boîte de vitesses doit être dans une certaine position, dite position de démarrage. Ainsi le véhicule peut être immobilisé si la fourchette n'est pas dans la position de démarrage et que la pression entre les deux accumulateurs est inférieure au seuil critique.

Pour éviter cette panne, le brevet américain N° US 6 805 647 décrit une transmission automatique d'un véhicule électrique hybride comportant une pompe principale entraînée par un arbre de transmission pour fournir une pression hydraulique permettant de commander un actionneur, et une pompe électrique auxiliaire permettant de fournir cette pression lorsque le moteur thermique est arrêté. Cependant, la présence d'une seconde pompe hydraulique de secours impacte négativement l'encombrement d'un véhicule automobile.

Le document FR 2 804 192 A1 est considéré comme l'état de l'art le plus proche et décrit toutes les caractéristiques du préambule de la revendication 1 et du préambule de la revendication 7 de procédé correspondante.

### OBJET DE L'INVENTION

La présente invention a notamment pour but de proposer un dispositif de commande hydraulique comportant un système de secours peu encombrant permettant de commander l'actionneur hydraulique si la différence de pression entre l'accumulateur haute et basse n'est pas suffisante. L'invention propose ainsi d'ajouter une réserve de pression très basse pression au dispositif de commande hydraulique classique permettant d'assurer une dépression suffisante entre la basse pression et la très basse pression pour alimenter l'actionneur. L'invention propose ainsi un système simple et autonome énergétiquement.

Selon un premier aspect, l'invention concerne donc un dispositif de commande hydraulique d'une boîte de vitesses comprenant au moins un baladeur mis en mouvement par une fourchette, comportant au moins un actionneur hydraulique apte à déplacer la fourchette et au moins une électrovanne apte à modifier l'état de l'actionneur hydraulique à l'aide de la différence de pression entre un accumulateur haute pression et un accumulateur basse pression. Le dispositif est caractérisé en ce qu'il comporte en outre un accumulateur très basse pression, la différence de pression entre l'accumulateur basse pression et l'accumulateur très basse pression permettant à l'électrovanne de modifier l'état de l'actionneur.

Selon une réalisation, le dispositif de commande comportant plusieurs actionneurs hydrauliques, le dispositif de commande comporte un système de multiplexage des actionneurs.

Selon une réalisation, l'actionneur hydraulique du dispositif de commande est un vérin à double effet.

Selon une réalisation, le vérin à double effet comportant deux chambres délimitées par un piston, le dispositif de commande comporte en outre deux électrovannes permettant de remplir ou de vider chacune des chambres.

Selon une réalisation, le dispositif de commande comporte en outre une première électrovanne et un limiteur de débit connectés en série entre l'accumulateur haute pression et un premier point de raccordement, un accumulateur et limiteur de pression connectés en parallèle entre le premier point de raccordement et l'accumulateur basse pression, un capteur de pression et un limiteur de débit connectés en série entre le premier point de raccordement et un deuxième point de raccordement et une deuxième électrovanne reliant le deuxième point de raccordement à l'accumulateur basse pression.

Selon une réalisation, le dispositif de commande comporte en outre une électrovanne reliant l'accumulateur très basse pression avec le deuxième point de raccordement.

Selon un deuxième aspect, l'invention concerne un procédé de commande du dispositif de commande, caractérisé en ce qu'il comporte l'étape de mesurer la différence de pression entre l'accumulateur haute pression et l'accumulateur basse pression et l'étape d'ouvrir l'électrovanne lorsque la différence de pression est inférieure à un seuil critique.

Selon une mise en oeuvre, le procédé de commande du dispositif comporte l'étape de fermer l'électrovanne lorsque la différence de pression est supérieure à un seuil de fonctionnement.

Selon un troisième aspect, l'invention concerne une boîte de vitesses comportant un arbre primaire destiné à être relié à un dispositif d'embrayage, au moins un arbre secondaire destiné à être en relation avec le différentiel des roues du véhicule, au moins un rapport de vitesse formé par une roue associée à un des arbres et un pignon fou associé à l'autre arbre, un baladeur, déplaçable en translation sur l'arbre associé au pignon fou permettant de lier en rotation le pignon fou avec son arbre et une fourchette permettant de déplacer le baladeur. La boîte de vitesse est caractérisée en ce que la fourchette est déplacée en translation par le dispositif de commande.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :

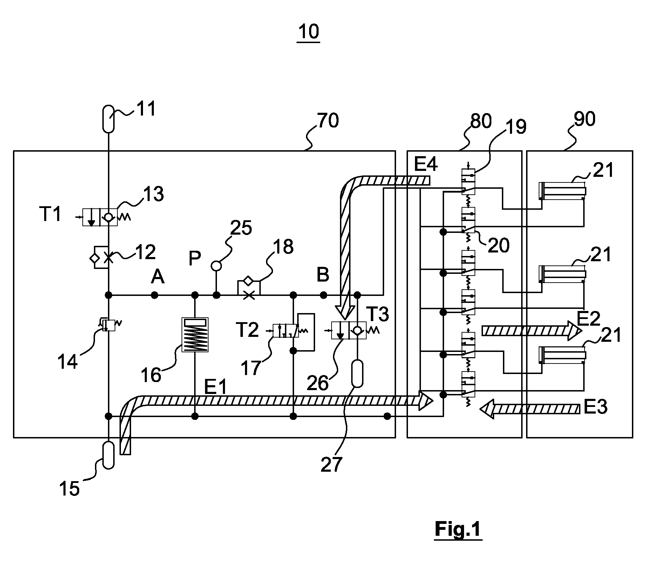

Figure 1 : une représentation schématique du dispositif de commande hydraulique selon un mode de réalisation de l'invention.

Les éléments identiques, similaires ou analogues, conservent les mêmes références d'une Figure à l'autre.

### DESCRIPTION D'EXEMPLES DE REALISATION DE L'INVENTION

La Figure 1 montre un dispositif de commande 10 hydraulique appartenant à une boîte de vitesses permettant de déplacer une fourchette associée à un baladeur d'un rapport de vitesse.

La boîte de vitesses comporte, de manière connue, un arbre primaire relié à un embrayage et un arbre secondaire relié aux roues du véhicule, ces deux arbres étant reliés entre eux par l'intermédiaire d'engrenages formant les rapports de vitesse. Chaque engrenage comporte une roue liée en rotation à un des arbres et un pignon fou monté sur l'autre arbre. Des manchons de crabotage, dit aussi baladeur, sont utilisés pour lier sélectivement les pignons fous à l'arbre sur lequel ils sont montés afin d'assurer le passage d'un rapport de vitesse. Ces baladeurs se déplacent sous la commande de fourchettes le long d'un moyeu solidaire d'un arbre de la boîte de vitesses.

La fourchette est mise en mouvement par un actionneur 21 hydraulique, par exemple un vérin à double effet. L'actionneur est compris dans un dispositif de commande 10 comportant un système hydraulique 70, et un ensemble 80 d'électrovannes. Pour une boîte de vitesses comportant plus de deux vitesses, un ensemble 90 d'actionneurs 21 déplace plusieurs fourchettes contrôlant plusieurs rapports de vitesse. Chaque actionneur 21 est alimenté par une différence de pression hydraulique entre un accumulateur haute pression 11 et un accumulateur basse pression 15. La modification de la différence de pression entre l'accumulateur haute 11 et basse 15 pression peut être réalisée par une pompe hydraulique alimentée par le moteur du véhicule. La pompe hydraulique alimente la pression de l'accumulateur haute pression 11 par un transfert de fluide depuis l'accumulateur basse pression 15 vers l'accumulateur haute pression 11.

Dans la suite de la description, on entend par « entrée de l'électrovanne » l'ouverture de l'électrovanne par laquelle le fluide pénètre à l'intérieur de l'électrovanne et par « sortie de l'électrovanne » l'ouverture de l'électrovanne par laquelle le fluide sort de l'électrovanne.

Une entrée d'une première électrovanne 13 et un limiteur de débit 12 sont connectés en série entre l'accumulateur haute pression 11 et un premier point de raccordement A, c'est-à-dire que l'entrée de l'électrovanne 13 est connectée à l'accumulateur haute pression 11, un limiteur de pression 12 étant branché entre la sortie de l'électrovanne 13 et le premier point de raccordement A. La première électrovanne 13, pilotée par la commande binaire T1, est du type tout ou rien et peut prendre la forme d'un clapet piloté. Il est préférable d'utiliser une électrovanne 13 étanche pour limiter les pertes.

Un accumulateur 16 et un limiteur de pression 14 sont connectés en parallèle entre le premier point de raccordement A et l'accumulateur basse pression 15. Le limiteur de pression 14 permet de limiter l'effort maximal de synchronisation réalisable par l'actionneur hydraulique 21. De plus, il garantit en cas de dysfonctionnement que la pression P dans le dispositif de commande 10 ne dépasse pas une valeur critique.

La pression P est mesurée par un capteur de pression 25 connecté en série avec un limiteur de débit 18 entre le premier point de raccordement A et un deuxième point de raccordement B.

Une deuxième électrovanne 17, pilotée par la commande binaire T2, relie le deuxième point de raccordement B à l'accumulateur basse pression 15. La deuxième électrovanne 17 est également du type tout ou rien et peut, par exemple, prendre la forme d'un clapet piloté.

L'invention propose d'ajouter à ce dispositif classique un accumulateur de très basse pression 27 en série avec une troisième électrovanne 26, pilotée par une commande binaire T3. L'accumulateur très basse pression 27 et l'électrovanne 26 sont connectés au deuxième point de raccordement B.

L'actionneur 21 hydraulique est de préférence un vérin à double effet comportant deux chambres séparées par un piston. Deux électrovannes 19, 20, connectés au deuxième point de raccordement B, permettent de remplir ou de vider chacune des chambres. Le remplissage ou le vidage des chambres du vérin aura pour effet de déplacer le piston qui entraîne la fourchette. Les électrovannes 17, 19, 20 et 26 peuvent être des électrovannes à tiroirs avec une étanchéité moindre que l'électrovanne 13. En effet, les fuites des électrovannes 26, 17, 19 et 20 ont un impact sur l'étanchéité du dispositif de commande 10 uniquement pendant les phases de commutation de rapport lorsque l'électrovanne 13 est ouverte.

Le dispositif de commande 10 comporte en outre un système de calcul et de contrôle permettant d'une part l'actionnement des électrovannes 13, 17, 19, 20 et 26 et d'autre part le contrôle de la pression P (mesurée par le capteur de pression 25).

Le système de calcul et de contrôle mesure la différence de pression entre l'accumulateur haute pression 11 et l'accumulateur basse pression 15 à l'aide de la pression P. Lorsque le moteur est arrêté et que la différence de pression est inférieure à un seuil critique permettant de déplacer correctement les fourchettes, le système de calcul et de contrôle ouvre l'électrovanne 26 reliant ainsi l'accumulateur très basse pression 27 avec le circuit. Une différence de pression entre l'accumulateur basse pression 15 et l'accumulateur très basse pression 27 permet ainsi de contrôler les actionneurs 21. La pression de l'accumulateur basse pression 15 se dirige suivant la flèche E1 jusqu'aux électrovannes 19, 20 qui commande le déplacement des pistons suivant les flèches E2 et E3. La pression des électrovannes 19, 20 se dirige ensuite dans l'accumulateur très basse pression 27 suivant la flèche E4. Les actionneurs 21 déplacent ainsi les fourchettes pour permettre le démarrage du moteur entraînant la pompe hydraulique qui augmente la différence de pression entre l'accumulateur haute pression 11 et l'accumulateur basse pression 15.

Lors de la phase d'utilisation de l'accumulateur très basse pression 27, le fluide contenu dans les chambres des vérins formant les actionneurs 21 hydrauliques est envoyé dans l'accumulateur très basse pression 27. Lorsque le moteur démarre, la pompe hydraulique transfère la pression de l'accumulateur basse pression 15 vers l'accumulateur haute pression 11. La pression de l'accumulateur basse pression 15 est alors inférieure à la pression de l'accumulateur très basse pression 27. Le fluide contenu dans les chambres des vérins se décharge donc dans l'accumulateur basse pression 15 permettant de reconstituer le niveau de pression de l'accumulateur très basse pression 27. Lorsque le niveau de pression de l'accumulateur très basse pression 27 est reconstitué, le système de calcul et de contrôle ferme l'électrovanne 26.

## Revendications

1. Dispositif de commande (10) hydraulique d'une boîte de vitesses comprenant au moins un baladeur mis en mouvement par une fourchette, comportant :
- au moins un actionneur (21) hydraulique apte à déplacer la fourchette et
- au moins une électrovanne (13, 17) apte à modifier l'état de l'actionneur (21) hydraulique à l'aide de la différence de pression entre un accumulateur haute pression (11) et un accumulateur basse pression (15),
**caractérisé en ce que** le dispositif de commande comporte en outre un accumulateur très basse pression (27), la différence de pression entre l'accumulateur basse pression (15) et l'accumulateur très basse pression (27) permettant à l'électrovanne (13, 17) de modifier l'état de l'actionneur.

2. Dispositif de commande (10) hydraulique selon la revendication 1, **caractérisé en ce que**, le dispositif de commande (10) comportant plusieurs actionneurs (21) hydrauliques, le dispositif de commande comporte un système de multiplexage des actionneurs (21).

3. Dispositif de commande (10) hydraulique selon la revendication 1 ou 2, **caractérisé en ce que** l'actionneur (21) hydraulique du dispositif de commande (10) est un vérin à double effet.

4. Dispositif de commande (10) hydraulique selon la revendication 3, **caractérisé en ce que** le vérin à double effet comportant deux chambres délimitées par un piston, le dispositif de commande (10) comporte en outre deux électrovannes (19, 20) permettant de remplir ou de vider chacune des chambres.

5. Dispositif de commande (10) hydraulique selon l'une des revendications 1 à 4, **caractérisé en ce que** le dispositif de commande (10) comporte en outre :
- une première électrovanne (13) et un limiteur de débit (12) connectés en série entre l'accumulateur haute pression (11) et un premier point de raccordement (A),
- un accumulateur (16) et limiteur de pression (14) connectés en parallèle entre le premier point de raccordement (A) et l'accumulateur basse pression (15),
- un capteur de pression (25) et un limiteur de débit (18) connectés en série entre le premier point de raccordement (A) et un deuxième point de raccordement (B) et
- une deuxième électrovanne (17) reliant le deuxième point de raccordement (B) à l'accumulateur basse pression (15).

6. Dispositif de commande (10) hydraulique selon la revendication 5, **caractérisé en ce qu'**il comporte en outre une électrovanne (26) reliant l'accumulateur très basse pression (27) avec le deuxième point de raccordement (B).

7. Procédé de commande du dispositif (10) de commande selon la revendication 6, **caractérisé en ce qu'**il comporte :
- l'étape de mesurer la différence de pression entre l'accumulateur haute pression (11) et l'accumulateur basse pression (15) et
- l'étape d'ouvrir l'électrovanne (26) lorsque la différence de pression est inférieure à un seuil critique.

8. Procédé de commande selon la revendication 7, **caractérisé en ce qu'**il comporte l'étape de fermer l'électrovanne (26) lorsque la différence de pression est supérieure à un seuil de fonctionnement.

9. Boîte de vitesses comportant :
- un arbre primaire destiné à être relié à un dispositif d'embrayage,
- au moins un arbre secondaire destiné à être en relation avec le différentiel des roues du véhicule,
- au moins un rapport de vitesse formé par une roue associée à un des arbres et un pignon fou associé à l'autre arbre,
- un baladeur, déplaçable en translation sur l'arbre associé au pignon fou permettant de lier en rotation le pignon fou avec son arbre et
- une fourchette permettant de déplacer le baladeur,
**caractérisée en ce que** la fourchette est déplacée en translation par un dispositif de commande (10) selon l'une des revendications 1 à 6.

## Patentansprüche

1. Vorrichtung zum hydraulischen Steuern (10) eines Schaltgetriebes, die mindestens eine Schaltmuffe aufweist, die von einer Gabel in Bewegung versetzt wird, die Folgendes umfasst:
- mindestens einen hydraulischen Stellantrieb (21), der geeignet ist, um die Gabel zu bewegen, und
- mindestens ein Magnetventil (13, 17), das geeignet ist, um den Zustand des hydraulischen Stellantriebs (21) mit Hilfe des Druckunterschieds zwischen einem Hochdruckspeicher (11) und einem Niederdruckspeicher (15) zu ändern,
**dadurch gekennzeichnet, dass** die Steuervorrichtung außerdem einen Speicher (27) mit sehr niedrigem Druck (27) umfasst, wobei es der Druckunterschied zwischen dem Niederdruckspeicher (15) und dem Speicher (27) mit sehr niedrigem Druck dem Magnetventil (13, 17) erlaubt, den Zustand des Stellantriebs zu ändern.

2. Vorrichtung zum hydraulischen Steuern (10) nach Anspruch 1, **dadurch gekennzeichnet, dass** die Steuervorrichtung (10) mehrere hydraulische Stellantriebe (21) umfasst, wobei die Steuervorrichtung ein System zum Multiplexen der Stellantriebe (21) umfasst.

3. Vorrichtung zum hydraulischen Steuern (10) nach Anspruch 1 oder 2, **dadurch gekennzeichnet, dass** der hydraulische Stellantrieb (21) der Steuervorrichtung (10) ein doppelt wirkender Zylinder ist.

4. Vorrichtung zum hydraulischen Steuern (10) nach Anspruch 3, **dadurch gekennzeichnet, dass** der doppelt wirkende Zylinder zwei Kammern aufweist, die von einem Kolben abgegrenzt sind, wobei die Steuervorrichtung (10) außerdem zwei Magnetventile (19, 20) umfasst, die es erlauben, jede der Kammern zu füllen oder zu leeren.

5. Vorrichtung zum hydraulischen Steuern (10) nach einem der Ansprüche 1 bis 4, **dadurch gekennzeichnet, dass** die Steuervorrichtung (10) ferner Folgendes umfasst:
- ein erstes Magnetventil (13) und einen Durchsatzbegrenzer (12), die zwischen dem Hochdruckspeicher (11) und einer ersten Anschlussstelle (A) in Serie geschaltet sind,
- einen Speicher (16) und Druckbegrenzer (14), die zwischen der ersten Anschlussstelle (A) und dem Niederdruckspeicher (15) parallel geschaltet sind,
- einen Druckfühler (25) und einen Durchsatzbegrenzer (18), die zwischen der ersten Anschlussstelle (8) und einer zweiten Anschlussstelle (B) in Serie geschaltet sind, und
- ein zweites Magnetventil (17), das die zweite Anschlussstelle (B) mit dem Niederdruckspeicher (15) verbindet.

6. Vorrichtung zum hydraulischen Steuern (10) nach Anspruch 5, **dadurch gekennzeichnet, dass** sie außerdem ein Magnetventil (26) umfasst, das den Speicher (27) mit sehr niedrigem Druck (27) mit der zweiten Anschlussstelle (B) verbindet.

7. Verfahren zum Steuern der Steuervorrichtung (10) nach Anspruch 6, **dadurch gekennzeichnet, dass** es Folgendes umfasst:
- den Schritt des Messens des Druckunterschieds zwischen dem Hochdruckspeicher (11) und dem Niederdruckspeicher (15)
- den Schritt des Öffnens des Magnetventils (26), wenn der Druckunterschied kleiner ist als ein kritischer Schwellenwert.

8. Steuerverfahren nach Anspruch 7, **dadurch gekennzeichnet, dass** es den Schritt des Schließens des Magnetventils (26) umfasst, wenn der Druckunterschied größer ist als ein Betriebsschwellenwert.

9. Schaltgetriebe, das Folgendes umfasst:
- eine Hauptwelle, die dazu bestimmt ist, mit einer Kupplungsvorrichtung verbunden zu werden,
- mindestens eine Nebenwelle, die dazu bestimmt ist, mit dem Differenzial der Räder des Fahrzeugs in Beziehung zu stehen,
- mindestens ein Drehzahlverhältnis, das von einem Rad, das mit einer der Wellen assoziiert ist, und einem Freilaufritzel, das mit der anderen Welle assoziiert ist, gebildet ist,
- eine Schaltmuffe, die in Verschiebung auf der Welle, die mit dem Freilaufritzel verbunden ist, beweglich ist, die es erlaubt, das Freilaufritzel mit seiner Welle in Drehung zu verbinden, und
- eine Gabel, die es erlaubt, die Schaltmuffe zu bewegen,
**dadurch gekennzeichnet, dass** die Gabel in Verschiebung von einer Steuervorrichtung (10) nach einem der Ansprüche 1 bis 6 bewegt wird.

## Claims

1. A device (10) for hydraulically controlling a gearbox including at least one sliding gear set in motion by a fork, comprising:
- at least one hydraulic actuator (21) capable of moving the fork and
- at least one solenoid valve (13, 17) that is capable of changing the state of the hydraulic actuator (21) by means of the pressure differential between a high-pressure accumulator (11) and a low-pressure accumulator (15),
**characterized in that** the controlling device further comprises a very low-pressure accumulator (27), the pressure differential between the low-pressure accumulator (15) and the very low-pressure accumulator (27) enabling the solenoid valve (13, 17) to change the state of the actuator.

2. The device (10) for hydraulically controlling according to Claim 1, **characterized in that**, with the controlling device (10) comprising several hydraulic actuators (21), the controlling device comprises a multiplexing system of the actuators (21).

3. The device (10) for hydraulically controlling according to Claim 1 or 2, **characterized in that** the hydraulic actuator (21) of the controlling device (10) is a double-acting jack.

4. The device (10) for hydraulically controlling according to Claim 3, **characterized in that**, with the double-acting jack comprising two chambers delimited by a piston, the controlling device (10) further comprises two solenoid valves (19, 20) enabling each of the chambers to be filled or emptied.

5. The device (10) for hydraulically controlling according to one of Claims 1 to 4, **characterized in that** the controlling device (10) further comprises:
- a first solenoid valve (13) and a flow limiter (12) connected in series between the high-pressure accumulator (11) and a first connection point (A),
- an accumulator (16) and pressure limiter (14) connected in parallel between the first connection point (A) and the low-pressure accumulator (15),
- a pressure sensor (25) and a flow limiter (18) connected in series between the first connection point (A) and a second connection point (B) and
- a second solenoid valve (17) connecting the second connection point (B) to the low-pressure accumulator (15).

6. The device (10) for hydraulically controlling according to Claim 5, **characterized in that** it further comprises a solenoid valve (26) connecting the very low-pressure accumulator (27) with the second connection point (B).

7. A method for controlling the controlling device (10) according to Claim 6, **characterized in that** it comprises:
- the step of measuring the pressure differential between the high-pressure accumulator (11) and the low-pressure accumulator (15) and
- the step of opening the solenoid valve (26) when the pressure differential is less than a critical threshold.

8. The method for controlling according to Claim 7, **characterized in that** it comprises the step of closing the solenoid valve (26) when the pressure differential is greater than an operating threshold.

9. A gearbox comprising:
- a primary shaft intended to be connected to a clutch device,
- at least one secondary shaft intended to be in relation with the differential of the wheels of the vehicle,
- at least one gear ratio formed by a wheel associated with one of the shafts and an idling gear associated with the other shaft,
- a sliding gear, movable in translation on the shaft associated with the idling gear enabling the idling gear to be linked in rotation with its shaft and
- a fork enabling the sliding gear to be moved,
**characterized in that** the fork is moved in translation by a controlling device (10) according to one of Claims 1 to 6.
